# EUROPEAN PATENT APPLICATION

(11) **EP 4 730 313 A1**
(43) Date of publication of application: **22.04.2026**
(21) Application number: 24877433.3
(22) Date of filing: 24.09.2024
(51) Int. Cl.: G09G 3/32

(54) **MODULAR DISPLAY DEVICE AND METHOD FOR CONTROLLING SAME**

(30) Priority: 10.10.2023 KR 20230134575
(71) Applicant: Samsung Electronics Co., Ltd., Suwon-si, Gyeonggi-do 16677 (KR)
(72) Inventor: OH, Sanghoon, Suwon-si Gyeonggi-do 16677 (KR); KIM, Youngkook, Suwon-si Gyeonggi-do 16677 (KR); HUR, Jung, Suwon-si Gyeonggi-do 16677 (KR)
(74) Representative: Appleyard Lees IP LLP
(86) International application number: PCT/KR2024/014414
(87) International publication number: WO 2025/079895

(57) **Abstract**

A modular display device is disclosed. The modular display device includes: a plurality of display modules; and a plurality of timing controllers configured to control a plurality of driver integrated circuits (IC) of the plurality of display modules to perform pulse width modulation (PWM)-driving of pixels included in the plurality of display modules wherein the pixels are driven in a plurality of sub-frame intervals within the frame interval, and at least one timing controller among the plurality of timing controllers controls at least one driver IC that drives first pixels among the pixels included in the plurality of display modules to allow a plurality of sub-frame intervals for the first pixels to be different from a plurality of sub-frame intervals for second pixels.

## Description

### [Technical Field]

The present disclosure relates to a modular display device including a plurality of display modules and a method for controlling the same.

### [Background Art]

Recently, various types of display systems are being developed and distributed. In particular, as display systems become larger and have higher resolution, the number of display devices included in a display system is gradually increasing.

In case of a modular display device, the size and shape of the modular display device may be changed in various ways depending on the number of display devices, a size of the display device, or the like included in the modular display device.

However, as the modular display device becomes larger, a user may have difficulty in accurately identifying a position of an individual display device or an individual display module included in the modular display device.

### [Disclosure of Invention]

### [Solution to Problem

According to an embodiment of the present disclosure, provided is a modular display device including: a plurality of display modules; and a plurality of timing controllers configured to control a plurality of driver integrated circuits (ICs) included in the plurality of display modules to perform pulse width modulation (PWM) driving on pixels included in the plurality of display modules, wherein the pixels are driven in a plurality of sub-frame intervals within a frame interval, and at least one timing controller among the plurality of timing controllers is configured to control at least one driver IC configured to drive first pixels among the pixels included in the plurality of display modules to enable a plurality of sub-frame intervals for the first pixels to be different from a plurality of sub-frame intervals for second pixels.

The at least one timing controller may be configured to control the at least one driver IC configured to drive the first pixels to enable the number of plurality of sub-frame intervals for the first pixels within the frame interval to be different from the number of plurality of sub-frame intervals for the second pixels within the frame interval.

The number of plurality of sub-frame intervals for the first pixels may be greater than the number of plurality of sub-frame intervals for the second pixels.

The number of plurality of sub-frame intervals for the first pixels may be less than the number of plurality of sub-frame intervals for the second pixels.

A refresh rate within a frame may be determined based on the number of sub-frame intervals within the frame interval, and a refresh rate of the first pixels may be different from a refresh rate of the second pixels.

The at least one timing controller may be configured to control the at least one driver IC configured to drive the first pixels to enable positions of the plurality of sub-frame intervals for the first pixels within the frame interval to be different from positions of the plurality of sub-frame intervals for the second pixels within the frame interval.

The plurality of sub-frame intervals for the first pixels may be positioned in a front time interval within the frame interval, and the plurality of sub-frame intervals for the second pixels may be positioned in an entire time interval within the frame interval.

The plurality of sub-frame intervals for the first pixels may be positioned in a rear time interval within the frame interval, and the plurality of sub-frame intervals for the second pixels may be positioned in an entire time interval within the frame interval.

The plurality of sub-frame intervals for the first pixel may be used to identify a position of a region including the first pixels on the modular display device.

According to an embodiment of the present disclosure, provided is a method for controlling a modular display device, in which the device includes a plurality of display modules and a plurality of timing controllers for controlling a plurality of driver integrated circuits (ICs) included in the plurality of display modules, the method including: performing, by at least one first timing controller among the plurality of timing controllers, pulse width modulation (PWM) driving on first pixels among pixels included in the plurality of display modules; and performing, by at least one second timing controller among the plurality of timing controllers, PWM driving on second pixels among the pixels included in the plurality of display modules, wherein the pixels are driven in a plurality of sub-frame intervals within a frame interval, and in the performing of the PWM driving on the first pixels, at least one driver IC configured to drive the first pixels is controlled to enable a plurality of sub-frame intervals for the first pixels among the pixels included in the plurality of display modules to be different from a plurality of sub-frame intervals for the second pixels.

According to an embodiment of the present disclosure, provided is a non-transitory computer-readable medium storing computer instructions that cause a modular display device to perform an operation when executed by a controller of the modular display device which includes a plurality of display modules and a plurality of timing controllers for controlling a plurality of driver integrated circuits (ICs) included in the plurality of display modules, wherein the operation includes: performing, by at least one first timing controller among the plurality of timing controllers, pulse width modulation (PWM) driving on first pixels among pixels included in the plurality of display modules; and performing, by at least one second timing controller among the plurality of timing controllers, PWM driving on second pixels among the pixels included in the plurality of display modules, wherein the pixels are driven in a plurality of sub-frame intervals within a frame interval, and in the performing of the PWM driving on the first pixels, at least one driver IC configured to drive the first pixels is controlled to enable a plurality of sub-frame intervals for the first pixels among the pixels included in the plurality of display modules to be different from a plurality of sub-frame intervals for the second pixels.

### [Brief Description of Drawings]

FIG. 1A is a view illustrating a modular display device according to an embodiment of the present disclosure.
FIG. 1B is a view illustrating one of a plurality of display devices included in the modular display device according to an embodiment of the present disclosure.
FIG. 2 is a view illustrating a plurality of pixels included in the display module according to an embodiment of the present disclosure.
FIG. 3 is a view illustrating pixels driven by a plurality of driver integrated circuits (ICs) included in the display module according to an embodiment of the present disclosure.
FIG. 4 is a view illustrating pulse width modulation (PWM) driving performed on the modular display device according to an embodiment of the present disclosure.
FIG. 5 is a block diagram illustrating a configuration of the modular display device according to an embodiment of the present disclosure.
FIGS. 6A, 6B, 7A, 7B, 8A, 8B, and 8C are views illustrating a method for adjusting a sub-frame interval by the modular display device according to an embodiment of the present disclosure.
FIG. 9 is a block diagram illustrating a configuration of the modular display device according to an embodiment of the present disclosure.
FIG. 10 is a view illustrating a system according to an embodiment of the present disclosure.
FIG. 11 is a block diagram illustrating a configuration of an electronic apparatus according to an embodiment of the present disclosure.
FIG. 12 is a flowchart illustrating a method for controlling a modular display device according to an embodiment of the present disclosure.

### [Mode for Invention]

It should be understood that the various embodiments of the present disclosure and terms used herein are not intended to limit technical features described in the present disclosure to specific embodiments, and rather are intended to include various modifications, equivalents, and substitutions of the corresponding embodiments.

Throughout the accompanying drawings, similar components are denoted by similar reference numerals.

A singular noun corresponding to an item is intended to include one or more of the items unless a relevant context clearly indicates otherwise.

In the present disclosure, an expression such as "A or B," "at least one of A and B," "at least one of A or B," "A, B, or C," "at least one of A, B, and C," "at least one of A, B, or C," or the like may include any one of the items listed together or all possible combinations thereof. For example, "A or B," "at least one of A and B," or "at least one of A or B" may indicate all of 1) a case in which at least one A is included, 2) a case in which at least one B is included, or 3) a case in which both of at least one A and at least one B are included.

Terms such as "first," "second," or the like may be used simply to distinguish one element and another element from each other, and do not limit the corresponding components in any other respect (e.g., importance or order).

When a component (e.g., a first component) is mentioned to be "coupled with/to" or "connected to" another component (e.g., a second component) with or without terms "operatively" or "communicatively," it should be understood that the component may be directly coupled to another component (e.g., in a wired manner), in a wireless manner, or through a third component.

It should be further understood that terms "include," "have," or the like, used in the specification specify the presence of features, numerals, steps, operations, components, parts mentioned in the specification or combinations thereof, and do not preclude the presence or addition of one or more other features, numerals, steps, operations, components, parts, or combinations thereof.

When a component is referred to as being "connected," "coupled," "supported," or "in contact" with another component, it includes not only a case where the components are directly connected, coupled, supported, or in contact with each other, but also a case where the components are indirectly connected, coupled, supported, or in contact with each other through a third component.

When a component is referred to be disposed "on" another component, it includes not only a case where the component is in contact with another component, but also a case where still another component is interposed between the two components.

A term "and/or" includes a combination of a plurality of related component or any one of the plurality of related components.

In some contexts, an expression "a device configured to ~" may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor (not shown) except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in more detail with reference to the accompanying drawings.

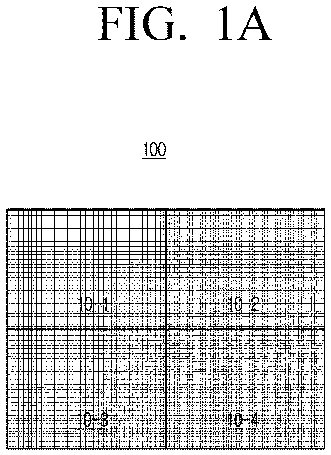

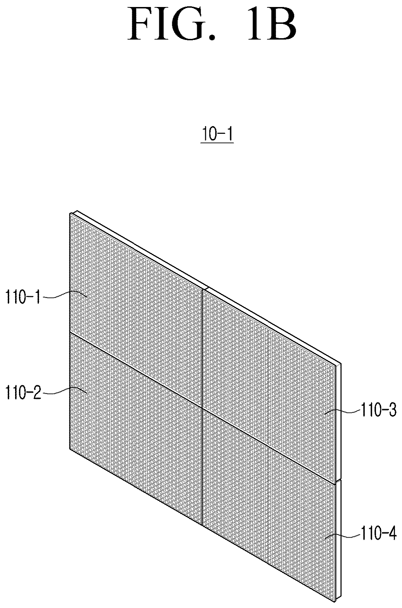

FIG. 1A is a view illustrating a modular display device according to an embodiment of the present disclosure. FIG. 1B is a view illustrating one of a plurality of display devices included in the modular display device according to an embodiment of the present disclosure.

A modular display device 100 according to the present disclosure may be implemented as various types of devices each having a display function, such as a video wall, a large format display (LFD), a digital signage, or a digital information display (DID).

Referring to FIG. 1A, the modular display device 100 may include a plurality of display devices 10-1, 10-2, 10-3, and 10-4. Each of the display devices 10-1, 10-2, 10-3, and 10-4 may be referred to as a sub-screen or a cabinet according to an embodiment.

The plurality of display devices 10-1, 10-2, 10-3, and 10-4 may be disposed or arranged in a matrix form. In FIG. 1A, the plurality of display devices 10-1, 10-2, 10-3, and 10-4 are illustrated as being arranged in a 2×2 form, and the present disclosure is not limited thereto. For example, the modular display device 100 may include a plurality of display devices arranged in an m₁×n₁ form (where m₁ and n₁ are natural numbers). An arrangement form, the number of display devices, or the like may vary depending on specifications (e.g., resolution or size) of the modular display device, manufacturing purposes of a manufacturer, or the like.

Referring to FIG. 1B, the display device 10-1 may include a plurality of display modules 110-1, 110-2, 110-3, and 110-4.

The plurality of display modules 110-1, 110-2, 110-3, and 110-4 may be arranged in a matrix form. In FIG. 1B, the plurality of display modules 110-1, 110-2, 110-3, and 110-4 are illustrated as being arranged in a 2×2 form, and the present disclosure is not limited thereto. For example, the display device 10-1 may include a plurality of display modules arranged in an m₂×n₂ form (where m₂ and n₂ are natural numbers). An arrangement form, the number of display modules, or the like may vary depending on specifications (e.g., resolution or size) of the display device, manufacturing purposes of a manufacturer, or the like.

The plurality of display modules 110-1, 110-2, 110-3, and 110-4 have the same configuration, and the display module 110-1 is thus described as an example. Meanwhile, the following description of the display module 110-1 may be applied to the plurality of display modules included in the modular display device 100.

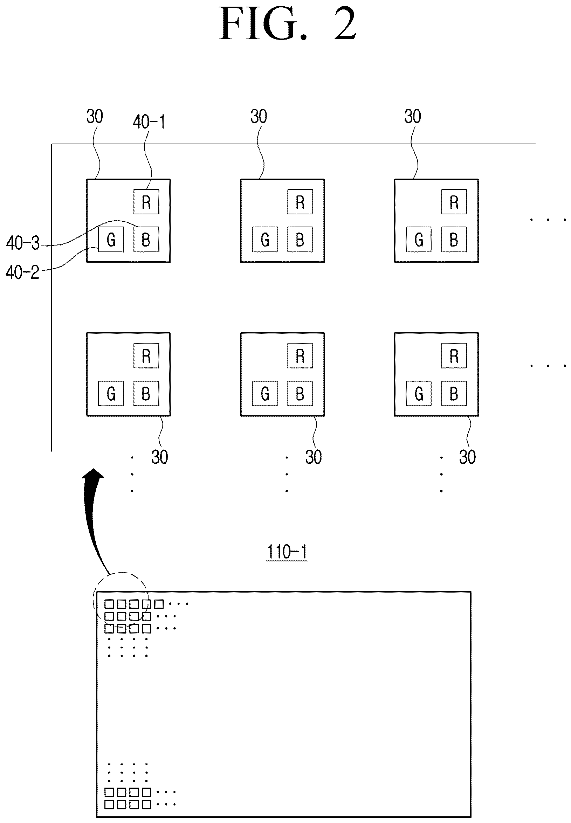

Referring to FIG. 2, the display module 110-1 may include a plurality of pixels 30 arranged in a matrix form. Each pixel 30 may include a plurality of sub-pixels 40-1, 40-2, and 40-3.

The plurality of sub-pixels 40-1, 40-2, and 40-3 may include a red (R) sub-pixel 40-1, a green (G) sub-pixel 40-2, and a blue (B) sub-pixel 40-3.

The R sub-pixel 40-1 may include a red light-emitting device that emits red-colored light, the G sub-pixel 40-2 may include a green light-emitting device that emits green-colored light, and the B sub-pixel 40-3 may include a blue light-emitting device that emits blue-colored light.

The light-emitting device may be a micro light-emitting diode (micro LED). A micro LED refers to an LED having a size of 100 micrometers (µm) or less and is an ultra-small light-emitting device that emits light by itself. The display module 110-1 in which sub-pixels are implemented as micro LEDs may be referred to as a micro LED display module (or a micro LED display panel). The micro LED display module may provide improved contrast, response time, and energy efficiency compared to a liquid crystal display (LCD) panel requiring a backlight.

Each of the sub-pixels 40-1, 40-2, and 40-3 may include a pixel circuit for driving the light-emitting device. The pixel circuit may be provided for each light-emitting device. The pixel circuit may include transistors or the like and may be formed in a thin film transistor (TFT) layer included in the display module 110-1. The pixel circuit may be electrically connected to the light-emitting device and may provide current to the light-emitting device.

Meanwhile, in FIG. 2, the sub-pixels 40-1, 40-2, and 40-3 are illustrated as being arranged in an L-shape reversed left-to-right within a pixel region. However, the present disclosure is not limited thereto, and the R, G, and B sub-pixels 40-1, 40-2, and 40-3 may be disposed in a row within a pixel region or may be disposed in various forms according to an embodiment.

In addition, in FIG. 2, an example is described in which three types of sub-pixels are included in one pixel. However, according to an embodiment, four types of sub-pixels such as R, G, B, and W (white) may is included in one pixel.

The display module 110-1 may include a plurality of driver integrated circuits (ICs) for driving pixels. The driver IC may drive pixels connected to the driver IC among the entire pixels included in the display module 110-1. Accordingly, the entire pixels included in the display module 110-1 may be driven by the plurality of driver ICs.

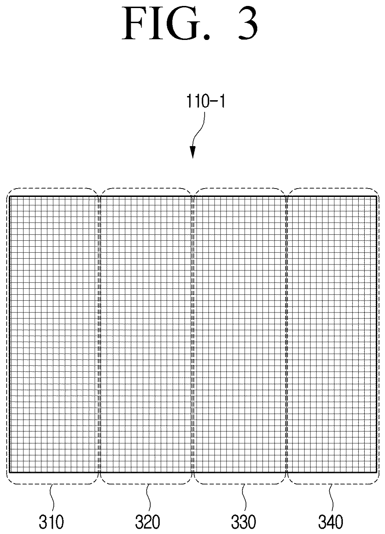

For example, referring to FIG. 3, assume a case where the display module 110-1 includes four driver ICs.

Pixels included in a first region 310 of the display module 110-1 may be driven by a first driver IC, pixels included in a second region 320 of the display module 110-1 may be driven by a second driver IC, pixels included in a third region 330 of the display module 110-1 may be driven by a third driver IC, and pixels included in a fourth region 340 of the display module 110-1 may be driven by a fourth driver IC.

Meanwhile, in FIG. 3, the display module 110-1 is described as including four driver ICs, and the present disclosure is not limited thereto. The number of driver ICs included in the display module 110-1, positions of pixels driven by the driver ICs, or the like may be variously changed.

The driver IC may perform pulse width modulation (PWM) driving on pixels.

Performing PWM driving on a pixel may include controlling pixel circuits included in the pixel to provide current having a controlled pulse width to light-emitting devices. A pulse width of current may also be referred to as a duty ratio of the current or drive duration (duration) of the current.

For example, the driver IC may control pixel circuits to provide current to light-emitting devices in a plurality of sub-frame intervals within each frame interval. For example, the driver IC may convert image data provided from a timing controller into image data voltages in an analog form. In addition, the driver IC may control pixel circuits by using the image data voltages and various control signals to enable the pixel circuits to provide current to light-emitting devices in the plurality of sub-frame intervals corresponding to the image data voltages. Lengths of the plurality of sub-frame intervals may be determined based on the image data voltages.

Accordingly, the driver IC may control a pulse width of current provided to light-emitting devices based on the image data voltages to control luminance of light emitted from the light-emitting devices. For example, the light-emitting devices may express a brighter gray-scale value as lengths of the plurality of sub-frame intervals become longer.

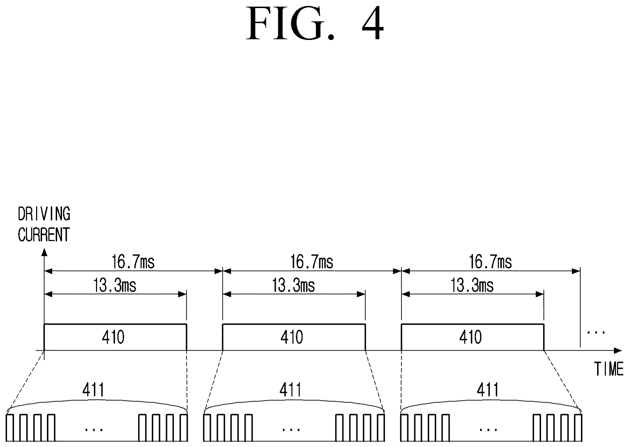

For example, referring to FIG. 4, when a frame rate of an image is 60 Hertz (Hz), one frame interval may be 16.7 (=1/60) millisecond (ms). The driver IC may drive pixels in a front time interval 410 (e.g., 13.3 ms) within each frame interval. Each time interval 410 may include the plurality of sub-frame intervals 411. A time interval among the plurality of sub-frame intervals 411 may be equal to each other.

The light-emitting devices included in the display module 110-1 may emit light in the sub-frame intervals, and accordingly, a screen refresh rate within the frame interval may be determined according to the number of sub-frame intervals. The screen refresh rate may represent the number of image frames displayed per second. For example, a screen refresh rate may be 1920 Hz (=60 Hz × 32) when a frame rate of an image is 60 Hz and 32 sub-frame intervals are included in the frame interval.

Referring again to FIGS. 1A and 1B, each of the plurality of display devices 10-1, 10-2, 10-3, and 10-4 may include a timing controller. Accordingly, the modular display device 100 may include a plurality of timing controllers.

Hereinafter, the display device 10-1 is described as an example. Meanwhile, the following description of the display device 10-1 may be applied to the plurality of display devices included in the modular display device 100.

The timing controller included in the display device 10-1 may be connected to the plurality of driver ICs included in the plurality of display modules 110-1, 110-2, 110-3, and 110-4. In addition, the timing controllers may control the plurality of driver ICs to drive the pixels included in the plurality of display modules 110-1, 110-2, 110-3, and 110-4.

For example, the timing controllers may control the plurality of driver ICs by using image data and various control signals to display an image on the display device 10-1 based on a frame rate. For example, the timing controllers may control the plurality of driver ICs to start scanning based on timings corresponding to the respective frames and may provide image data to the plurality of driver ICs. In addition, the timing controllers may control the plurality of driver ICs to convert image data into image data voltages in an analog form and to drive pixels selected from scanning based on the image data voltages.

Meanwhile, the modular display device 100 may display an image by using the plurality of display devices 10-1, 10-2, 10-3, and 10-4. The image may include an image received from an external device (e.g., a set-top box, a computer, or a server) or an image pre-stored in the modular display device 100.

The plurality of display devices 10-1, 10-2, 10-3, and 10-4 may respectively display a plurality of segmented images. The plurality of segmented images may be combined to each other to display one entire image on the modular display device 100.

For example, the plurality of display devices 10-1, 10-2, 10-3, and 10-4 may identify image data corresponding to identification information of the display device from input image data and may display the segmented image by using the identified image data.

Identification information of the display device may be determined based on an arrangement form of the plurality of display devices 10-1, 10-2, 10-3, and 10-4 and may include coordinate information indicating a position of the display device among the plurality of display devices 10-1, 10-2, 10-3, and 10-4. Identification information of the display device may be set differently for each display device.

For example, as illustrated in FIG. 1A, assume a case where the plurality of display devices 10-1, 10-2, 10-3, and 10-4 are arranged in a 2×2 form.

The timing controller of the first display device 10-1 may display a first segmented image by obtaining image data corresponding to an image of a first region (e.g., an upper-left region) of an entire image from input image data based on identification information of the first display device 10-1, and driving pixels included in the first display device 10-1 based on the obtained image data. The timing controller of the second display device 10-2 may display a second segmented image by obtaining image data corresponding to an image of a second region (e.g., an upper-right region) of the entire image from the input image data based on identification information of the second display device 10-2, and driving pixels included in the second display device 10-2 based on the obtained image data. The timing controller of the third display device 10-3 may display a third segmented image by obtaining image data corresponding to an image of a third region (e.g., a lower-left region) of the entire image from the input image data based on identification information of the third display device 10-3, and driving pixels included in the third display device 10-3 based on the obtained image data. The timing controller of the fourth display device 10-4 may display a fourth segmented image by obtaining image data corresponding to an image of a fourth region (e.g., a lower-right region) of the entire image from the input image data based on identification information of the fourth display device 10-4, and driving pixels included in the fourth display device 10-4 based on the obtained image data.

Accordingly, the modular display device 100 may display one entire image in which the plurality of segmented images displayed by the plurality of display devices 10-1, 10-2, 10-3, and 10-4 are combined to one another.

Meanwhile, the modular display device 100 according to the present disclosure may adjust the plurality of sub-frame intervals within each frame interval, which is described in more detail below.

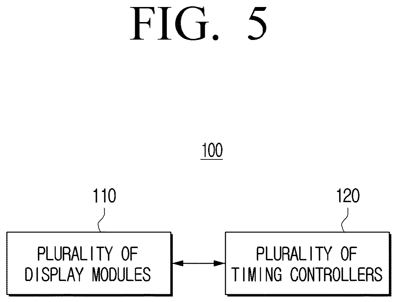

FIG. 5 is a block diagram illustrating a configuration of the modular display device according to an embodiment of the present disclosure.

Referring to FIG. 5, the modular display device 100 may include the plurality of display modules 110 and a plurality of timing controllers 120. Meanwhile, in describing a configuration illustrated in FIG. 5, detailed description of portions overlapping with the above description is omitted.

As described above, the modular display device 100 may include the plurality of display modules 110-1, 110-2, 110-3, and 110-4. The plurality of display modules 110 may include the plurality of display modules included in the modular display device 100.

As described above, each of the plurality of display modules included in the display devices 10-1, 10-2, 10-3, and 10-4 may include the plurality of driver ICs for performing PWM driving on pixels included in the display modules. In addition, the display devices 10-1, 10-2, 10-3, and 10-4 may include timing controllers for controlling the plurality of driver ICs of the plurality of display modules included in the display devices. Accordingly, the modular display device 100 including the plurality of display devices 10-1, 10-2, 10-3, and 10-4 may include the plurality of timing controllers 120 for controlling the plurality of driver ICs. That is, the plurality of timing controllers 120 may control the plurality of driver ICs included in the plurality of display modules to perform PWM driving on the pixels included in the plurality of display modules. The pixels may be driven in a plurality of sub-frame intervals within the frame interval.

Meanwhile, at least one timing controller among the plurality of timing controllers 120 may control at least one driver IC that drives first pixels among the pixels included in the plurality of display modules to enable a plurality of sub-frame intervals for the first pixels to be different from a plurality of sub-frame intervals for second pixels.

The first pixels may refer to some pixels among entire pixels included in the modular display device 100, and the second pixels may refer to remaining pixels among the entire pixels of the modular display device 100 except for the first pixels. That is, the plurality of sub-frame intervals for some pixels among the entire pixels of the modular display device 100 may be set differently from the plurality of sub-frame intervals for the remaining pixels.

The plurality of sub-frame intervals for the first pixels being different from the plurality of sub-frame intervals for the second pixels may include that the number of plurality of sub-frame intervals for the first pixels within the frame interval is different from the number of plurality of sub-frame intervals for the second pixels.

For example, at least one timing controller may control at least one driver IC that drives the first pixels to enable the number of plurality of sub-frame intervals for the first pixels within the frame interval to be different from the number of plurality of sub-frame intervals for the second pixels within the frame interval.

For example, the number of plurality of sub-frame intervals for the first pixels may be greater than the number of plurality of sub-frame intervals for the second pixels.

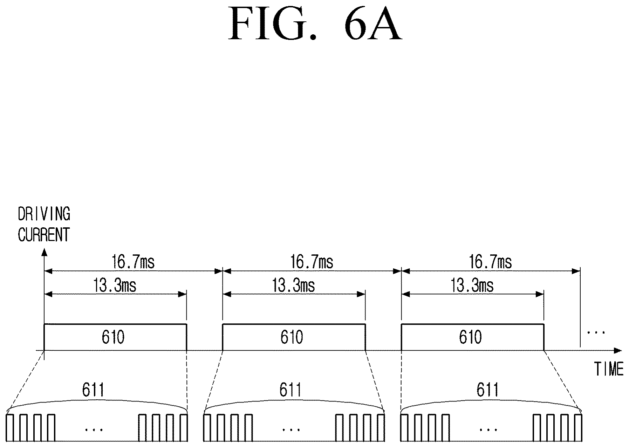

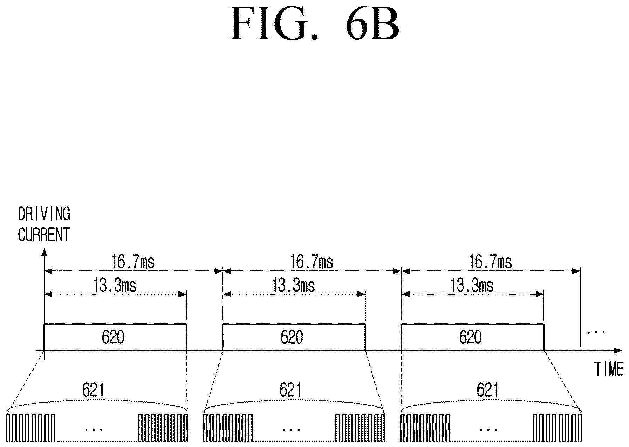

For example, referring to FIGS. 6A and 6B, at least one second timing controller may control at least one driver IC that drives the second pixels to enable the number of a plurality of sub-frame intervals 611 for the second pixels to become 32. Meanwhile, at least one first timing controller may control at least one driver IC that drives the first pixels to enable the number of a plurality of sub-frame intervals 621 for the first pixels to become 48. At least one first timing controller may reduce a pulse width of the plurality of sub-frame intervals 621 whose number is increased to 48 to enable the first pixels to receive the same current as in case of being driven through 32 sub-frame intervals.

In the above-described example, the first pixels are described as emitting light 48 times within the frame interval, and the second pixels are described as emitting light 32 times within the frame interval. However, the present disclosure is not limited thereto. That is, the number of sub-frame intervals for the first pixels and the second pixels may be determined to enable the number of light emissions of the first pixels within the frame interval to be greater than the number of light emissions of the second pixels.

For example, the number of plurality of sub-frame intervals for the first pixels may be less than the number of plurality of sub-frame intervals for the second pixels.

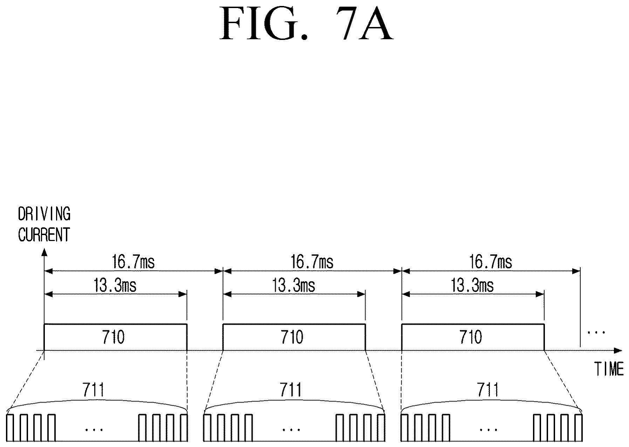

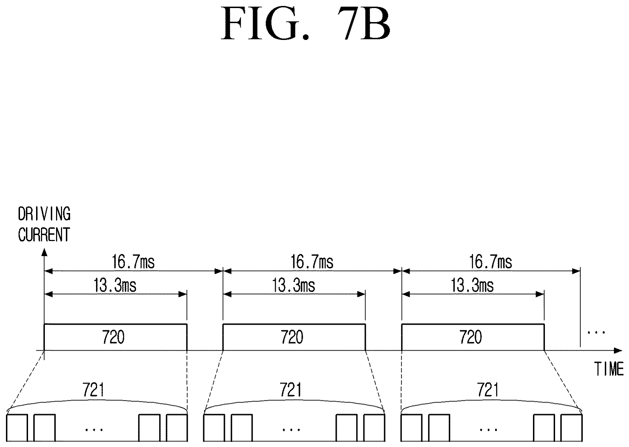

For example, referring to FIGS. 7A and 7B, at least one second timing controller may control at least one driver IC that drives the second pixels to enable the number of a plurality of sub-frame intervals 711 for the second pixels to become 32. Meanwhile, at least one first timing controller may control at least one driver IC that drives the first pixels to enable the number of a plurality of sub-frame intervals 721 for the first pixels to become 16. At least one first timing controller may lengthen a pulse width of the plurality of sub-frame intervals 721 whose number is reduced to 16 to enable the first pixels to receive the same current as in case of being driven through 32 sub-frame intervals.

In the above example, the first pixels are described as emitting light 16 times within the frame interval, and the second pixels are described as emitting light 32 times within the frame interval. However, the present disclosure is not limited thereto. That is, the number of sub-frame intervals for the first pixels and the second pixels may be determined to enable the number of light emissions of the first pixels within the frame interval to become less than the number of light emissions of the second pixels.

As such, at least one controller may adjust sub-frame intervals for some pixels among entire pixels of the modular display device 100 to enable sub-frame intervals for some pixels to be different from sub-frame intervals for remaining pixels.

Meanwhile, when the number of sub-frame intervals for the first pixels becomes different from the number of sub-frame intervals for the second pixels, a screen refresh rate of the first pixels may become different from a screen refresh rate of the second pixels. For example, in case of FIGS. 6A and 6B, a screen refresh rate of the first pixels is 2880 Hz (=60 Hz × 48), and a screen refresh rate of the second pixels is 1920 Hz (=60 Hz × 32). In addition, in case of FIGS. 7A and 7B, a screen refresh rate of the first pixels is 960 Hz (=60 Hz × 16), and a screen refresh rate of the second pixels is 1920 Hz (=60 Hz × 32).

Meanwhile, the plurality of sub-frame intervals for the first pixels being different from the sub-frame intervals for the second pixels may include that positions of the plurality of sub-frame intervals for the first pixels within the frame interval are different from positions of the plurality of sub-frame intervals for the second pixels within the frame interval.

For example, at least one timing controller may control at least one driver IC that drives the first pixels to enable positions of the plurality of sub-frame intervals for the first pixels within the frame interval to be different from positions of the plurality of sub-frame intervals for the second pixels within the frame interval.

For example, the plurality of sub-frame intervals for the first pixels may be positioned in a front time interval within the frame interval, and the plurality of sub-frame intervals for the second pixels may be positioned in an entire time interval within the frame interval.

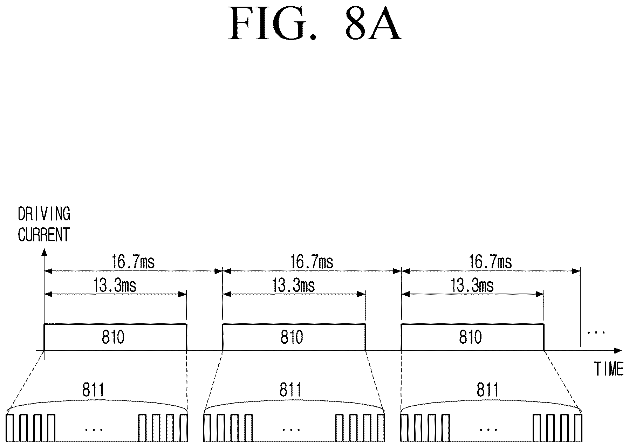

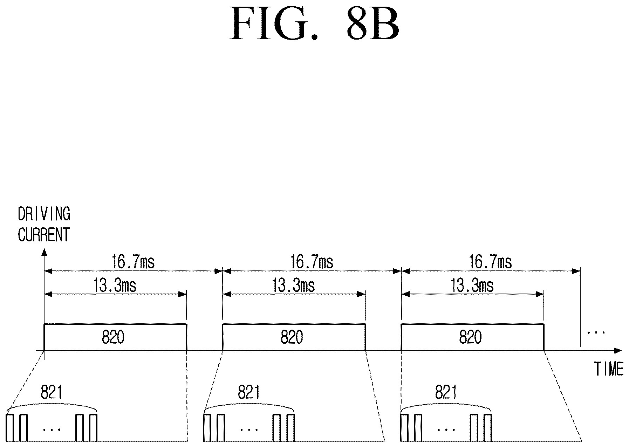

For example, referring to FIG. 8A, at least one second timing controller may control at least one driver IC that drives the second pixels to enable a plurality of sub-frame intervals 811 for the second pixels to be positioned at equal intervals in an entire time interval within the frame interval 810. Meanwhile, as illustrated in FIG. 8B, at least one first timing controller may control at least one driver IC that drives the first pixels to enable a plurality of sub-frame intervals 821 for the first pixels to be positioned at equal intervals in a front time interval within the frame interval 820.

For example, the plurality of sub-frame intervals for the first pixels may be positioned in a rear time interval within the frame interval, and the plurality of sub-frame intervals for the second pixels may be positioned in an entire time interval within the frame interval.

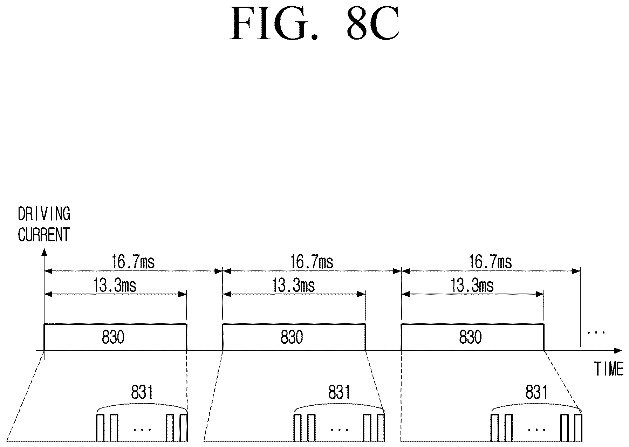

For example, referring to FIG. 8A, at least one second timing controller may control at least one driver IC that drives the second pixels to enable the plurality of sub-frame intervals 811 for the second pixels to be positioned at equal intervals in an entire time interval within the frame interval 810. Meanwhile, as illustrated in FIG. 8C, at least one first timing controller may control at least one driver IC that drives the first pixels to enable a plurality of sub-frame intervals 831 for the first pixels to be positioned at equal intervals in a rear time interval within the frame interval 830.

As such, at least one timing controller may adjust sub-frame intervals for some pixels among entire pixels of the modular display device 100 to enable positions of sub-frame intervals for some pixels to be different from positions of sub-frame intervals for remaining pixels. Accordingly, although the numbers of light emissions of the first pixels and the second pixels within the frame interval are the same as each other, the time intervals of light emission for the pixels may be different from each other.

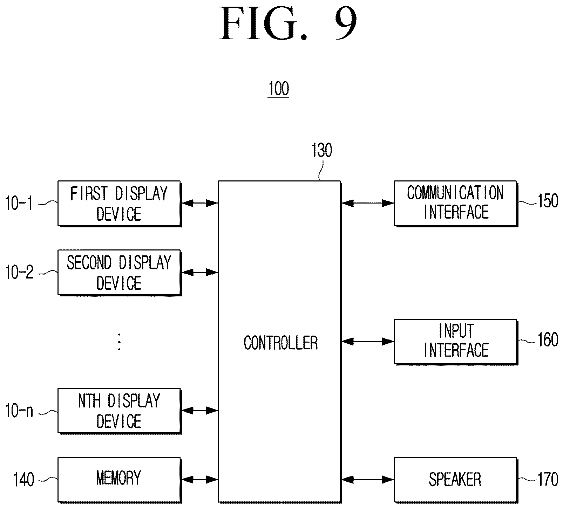

FIG. 9 is a block diagram illustrating a configuration of the modular display device according to an embodiment of the present disclosure.

Referring to FIG. 9, the modular display device 100 may include a plurality of display devices 10-1, 10-2, ..., 10-n, a controller 130, a memory 140, a communication interface 150, an input interface 160, and a speaker 170. Such a configuration is illustrative, and in implementing the present disclosure, a new configuration may be added to or some configurations may be omitted from the above configuration. Meanwhile, in describing the configuration illustrated in FIG. 9, detailed description of portions overlapping with the above description is omitted.

The plurality of display devices 10-1, 10-2, ..., 10-n may each include a plurality of display modules. In addition, the plurality of display modules included in each of the display devices 10-1, 10-2, ..., 10-n may each include a plurality of driver ICs for performing PWM driving on pixels included in the display module. In addition, the display devices 10-1, 10-2, ..., 10-n may include a timing controller for controlling the plurality of driver ICs of the plurality of display modules included in the display devices.

Accordingly, the modular display device 100 including the plurality of display devices 10-1, 10-2, ..., 10-n may include the plurality of display modules 110 and the plurality of timing controllers 120 for controlling the plurality of driver ICs included in the plurality of display modules 110.

The controller 130 may control overall operations of the modular display device 100. In detail, the controller 130 may be connected to components of the modular display device 100 to control overall operations of the controller 130. For example, the controller 130 may be connected to the plurality of display devices 10-1, 10-2, ..., 10-n, the memory 140, the communication interface 150, the input interface 160, and the speaker 170 to control the modular display device 100.

For example, the controller 130 may include at least one processor. At least one processor may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor may control one or any combination of other components included in the modular display device 100 and may perform operations related to communication or data processing. At least one processor may execute a program or instruction stored in the memory 140. For example, at least one processor may perform a method according to an embodiment of the present disclosure by executing at least one instruction stored in the memory 140.

When the method according to an embodiment of the present disclosure may include a plurality of operations, the plurality of operations may be performed by a single processor or may be performed by a plurality of processors. For example, when a first operation, a second operation, and a third operation are performed by the method according to an embodiment, all of the first, second, and third operations may be performed by a first processor, or the first operation and the second operation may be performed by the first processor (e.g., a generic-purpose processor), and the third operation may be performed by a second processor (e.g., an artificial intelligence-specific processor).

At least one processor may be implemented as a single-core processor including one core, or may be implemented as at least one multicore processor including multiple cores (e.g., homogeneous multiple cores or heterogeneous multiple cores). When at least one processor is implemented as a multicore processor, each of the multiple cores included in the multicore processor may include an internal memory of the processor such as a cache memory or an on-chip memory, and a common cache shared by the multiple cores may be included in the multicore processor. In addition, each (or some) of the multiple cores included in the multicore processor (or some of the multiple cores) may independently read and perform program instructions for implementing the method according to an embodiment of the present disclosure, or all (or some) of the multiple cores may cooperate to read and perform program instructions for implementing the method according to an embodiment of the present disclosure.

When the method according to an embodiment of the present disclosure includes a plurality of operations, the plurality of operations may be performed by one core among the multiple cores included in the multicore processor or may be performed by the multiple cores. For example, when a first operation, a second operation, and a third operation are performed by the method according to an embodiment, all of the first, second, and third operations may be performed by a first core included in the multicore processor, or the first operation and the second operation may be performed by the first core included in the multicore processor, and the third operation may be performed by a second core included in the multicore processor.

In embodiments of the present disclosure, the processor may refer to a system-on-chip in which at least one processor and other electronic components are integrated, the single-core processor, the multicore processor, or a core included in the single-core processor or the multicore processor, Here, the core may be implemented as a CPU, a GPU, an APU, a MIC, a DSP, an NPU, a hardware accelerator, or a machine learning accelerator. However, the embodiments of the present disclosure are not limited thereto.

For example, the controller 130 may perform processing on image data. For example, the controller 130 may include an image decoder for performing decoding on image data and may perform various processing on image data such as scaling, noise filtering, frame rate conversion, or resolution conversion.

For example, the controller 130 may display an image by using the plurality of display devices 10-1, 10-2, ..., 10-n. For example, the controller 130 may be electrically connected to the plurality of timing controllers included in the plurality of display devices 10-1, 10-2, ..., 10-n. In addition, the controller 130 may transmit various data such as image data and various control signals to the plurality of display devices 10-1, 10-2, ..., 10-n. The plurality of display devices 10-1, 10-2, ..., 10-n may each display a segmented image based on the image data. The plurality of segmented images may be combined to display one entire image on the modular display device 100.

For example, the controller 130 may control at least one timing controller among the plurality of timing controllers included in the plurality of display devices 10-1, 10-2, ..., 10-n to control at least one driver IC that drives the first pixels to enable the plurality of sub-frame intervals for the first pixels to be different from the plurality of sub-frame intervals for the second pixels.

For example, a user may input a user input for adjusting sub-frame intervals of pixels included in some regions of the modular display device 100 into the modular display device 100 by using a control personal computer (PC) connected to the modular display device 100. Here, the some regions may refer to at least some regions of a display module, at least some regions of a display device, or at least some regions of the modular display device 100. When the user input is received through the communication interface 150, the controller 130 may control at least one driver IC that drives pixels included in the some regions by using at least one timing controller to enable a plurality of sub-frame intervals for the pixels included in the some regions to be different from a plurality of sub-frame intervals for remaining pixels based on the user input.

The memory 140 may store data necessary for the modular display device 100 to operate according to an embodiment of the present disclosure. At least one instruction may be stored in the memory 140. In addition, the memory 140 may store a program, an application, and data for driving the modular display device 100.

The memory 140 may be implemented as a memory embedded in the modular display device 100 (e.g., a volatile memory, a non-volatile memory, a hard drive, or a solid state drive) depending on a data storage purpose or may be implemented as a memory detachable from the modular display device 100 (e.g., a memory card or an external memory).

The communication interface 150 may include circuitry. The communication interface 150 may communicate with an external device. For example, the communication interface 150 may receive image data, audio data, or the like from the external device. For example, the external device may refer to an electronic apparatus such as a sending box for transmitting image data received from a server or the like to the modular display device 100, is not limited thereto, and may include various electronic apparatuses such as a set-top box or a PC.

The communication interface 150 may include a wireless communication module or a wired communication module. The communication module may be implemented as at least one hardware chip.

The wireless communication module may refer to a module for communicating with an external device in a wireless manner. For example, the wireless communication module may include at least one of a wireless fidelity (Wi-Fi) module, a Bluetooth module, or an infrared communication module. However, the present disclosure is not limited thereto, and the wireless communication module may include a communication module that performs communication according to various wireless communication standards such as long term evolution (LTE), LTE advanced (LTE-A), fourth generation (4G), or fifth generation (5G).

The wired communication module may refer to a module for communicating with an external device in a wired manner. For example, the wired communication module may include at least one of a local area network (LAN) module or an Ethernet module. In addition, the wired communication module may include at least one wired interface among high-definition multimedia interface (HDMI), universal serial bus (USB), USB C-type, or a DisplayPort (DP).

The input interface 160 may include circuitry. The input interface 160 may receive a user input and may deliver the user input to the controller 130. For example, the input interface 160 may receive various user inputs for setting or selecting various functions supported by the modular display device 100.

The input interface 160 may include various types of input devices.

For example, the input interface 160 may include a physical button. The physical button may include a function key or a dial button. The physical button may be implemented as at least one key.

For example, the input interface 160 may receive a user input by using a touch method. For example, the input interface 160 may be implemented as a touch screen.

The speaker 170 may output an audio signal. For example, the speaker 170 may output audio corresponding to an image displayed on the modular display device 100, warning sounds related to operations of the modular display device 100, notification messages, or response messages corresponding to the user input.

Meanwhile, as described above, the modular display device 100 may adjust the sub-frame intervals for the first pixels to enable sub-frame intervals for the first pixels among the entire pixels to be different from the sub-frame intervals for the second pixels.

The plurality of sub-frame intervals for the first pixels may be used to identify a position of a region including the first pixels on the modular display device 100.

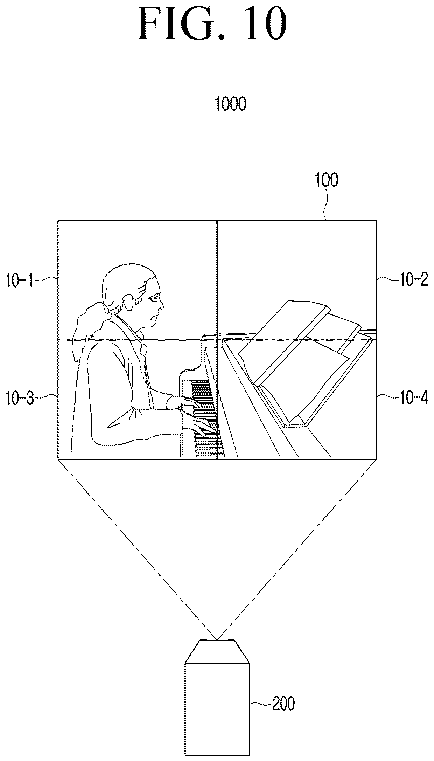

FIG. 10 is a diagram illustrating a system according to an embodiment of the present disclosure.

Referring to FIG. 10, a system 1000 may include the modular display device 100 and an electronic apparatus 200.

The modular display device 100 may display an image by using the plurality of display devices 10-1, 10-2, 10-3, and 10-4. Here, the modular display device 100 may adjust the plurality of sub-frame intervals for the first pixels among the entire pixels to enable the plurality of sub-frame intervals for the first pixels to be different from the plurality of sub-frame intervals for the second pixels. Even when the sub-frame intervals are adjusted, the user is unable to visually identify which region corresponds to a region in which the sub-frame intervals are adjusted on the entire screen of the modular display device 100.

The electronic apparatus 200 may capture the modular display device 100 by using a camera and may identify the region in which the sub-frame intervals are adjusted on the modular display device 100.

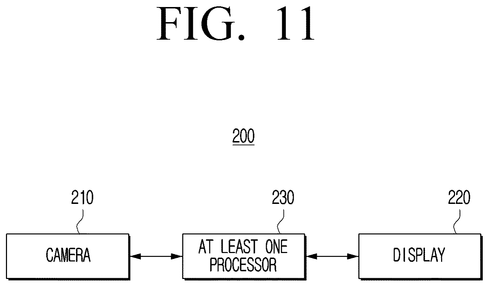

FIG. 11 is a block diagram illustrating a configuration of an electronic apparatus according to an embodiment of the present disclosure.

Referring to FIG. 11, the electronic apparatus 200 may include a camera 210, a display 220, and at least one processor 230.

The camera 210 may perform capturing and may obtain an image. For example, the camera 210 may include at least one lens, an image sensor, and an image signal processor.

The display 220 may display a screen. For example, the display 220 may be implemented as various types of displays such as a liquid crystal display (LCD) type, an organic light-emitting diode (OLED) display, a light-emitting diode (LED) display, a micro LED display, a mini LED display, or a quantum dot light-emitting diode (QLED) display.

At least one processor 230 may control overall operations of the electronic apparatus 200. In detail, at least one processor 230 may be connected to components of the electronic apparatus 200 to control the overall operations of the electronic apparatus 200. For example, at least one processor 230 may be connected to the camera 210 and the display 220 to control the electronic apparatus 100.

At least one processor 230 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor 230 may control one or any combination of other components of the electronic apparatus 200 and may perform operations related to communication or data processing. At least one processor 230 may execute a program or instruction stored in the memory of the electronic apparatus 200.

Hereinafter, for convenience of description, at least one processor 230 is referred to as the processor 230.

The processor 230 may capture the modular display device 100 by using the camera 210 and may identify the region in which the sub-frame intervals are adjusted on the modular display device 100.

For example, assume a case where the number of plurality of sub-frame intervals for the first pixels among the entire pixels of the modular display device 100 is adjusted. In this case, a parameter of the camera 210 such as a shutter speed may be set in consideration of the numbers of light emissions of the first pixels and the second pixels within the frame interval to detect the first pixels and the second pixels in terms of their numbers of light emissions.

The processor 230 may capture the modular display device 100 by using the camera 210 to obtain an image, may analyze the obtained image, and may detect numbers of light emissions of pixels included in the modular display device 100 within each frame interval. In addition, the processor 230 may identify a region having a number corresponding to the sub-frame intervals adjusted for the region among an entire region of the modular display device 100 based on the detected numbers of light emissions.

For example, assume a case where a position of sub-frame intervals for the first pixels among the entire pixels of the modular display device 100 is adjusted. In this case, a shutter angle of the camera 210 may be set to capture only a front time interval among an entire time interval of each frame interval or only a rear time interval among the entire time interval of each frame interval is captured.

The processor 230 may capture the modular display device 100 by using the camera 210 to obtain an image. In addition, the processor 230 may analyze the obtained image and may identify a region including pixels emitting no light in the front time interval or the rear time interval among the entire region of the modular display device 100.

Accordingly, the electronic apparatus 200 may identify a position of the region in which the sub-frame intervals are adjusted on the modular display device 100.

The processor 230 may display information on the position of the identified region on the display 220.

For example, the processor 230 may display an image of the modular display device 100 captured by using the camera 210 on the display 220. In addition, the processor 230 may control the display 220 to display a graphical user interface (GUI) on the region in which the sub-frame intervals are adjusted on the displayed image of the modular display device based on the position of the identified region. For example, the processor 230 may display the GUI by using various methods such as displaying a border of the region in another color, highlighting the region, or adding a specific image such as an arrow, a cursor, or an indicator on the region.

Accordingly, the user may check the region in which the sub-frame intervals are adjusted on the modular display device 100 by using an image displayed on the display 220. For example, when the user identifies that a problem occurs in some regions of the modular display device 100 or desires to change settings such as a color of some regions in the modular display device 100, the user needs to accurately identify a position of the region. However, when the modular display device 100 has a large screen, the user may have difficulty in accurately identifying positions of such regions. In this case, the user may adjust sub-frame intervals of some regions as a region in which a problem occurs or a region in which settings are to be changed and may check the region by using the electronic apparatus 200. In this case, even when an image is displayed with the sub-frame intervals adjusted, this adjustment may not be perceived by a viewer watching the image. Accordingly, convenience in installation and maintenance of the modular display device 100 may be improved in that the user may identify a position of a specific region while continuously being provided with a service for displaying an image by using the modular display device 100.

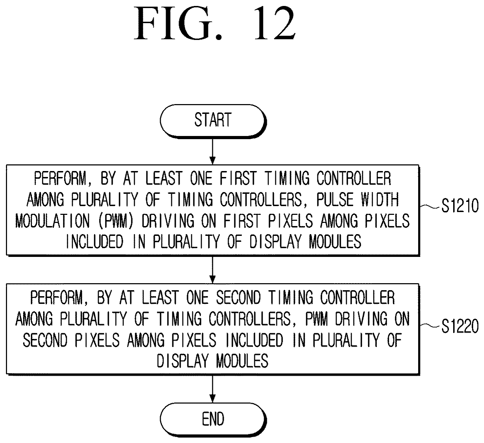

FIG. 12 is a flowchart illustrating a method for controlling a modular display device according to an embodiment of the present disclosure.

The method for controlling a modular display device, in which the device includes a plurality of display modules and a plurality of timing controllers for controlling a plurality of driver integrated circuits (ICs) included in the plurality of display modules, may be performed through the following steps.

The method may include performing, by at least one first timing controller among the plurality of timing controllers, pulse width modulation (PWM) driving on first pixels among pixels included in the plurality of display modules (S1210).

The method may include performing, by at least one second timing controller among the plurality of timing controllers, PWM driving on second pixels among the pixels included in the plurality of display modules (S1220).

The pixels included in the plurality of display modules may be driven in a plurality of sub-frame intervals within a frame interval.

In step S1210, at least one driver IC that drives the first pixels may be controlled to enable a plurality of sub-frame intervals for the first pixels to be different from a plurality of sub-frame intervals for the second pixels.

In step S1210, at least one driver IC that drives the first pixels may be controlled to enable the number of plurality of sub-frame intervals for the first pixels within the frame interval to be different from the number of plurality of sub-frame intervals for the second pixels within the frame interval.

For example, the number of plurality of sub-frame intervals for the first pixels may be greater than the number of plurality of sub-frame intervals for the second pixels. In addition, the number of plurality of sub-frame intervals for the first pixels may be less than the number of plurality of sub-frame intervals for the second pixels.

In addition, a refresh rate within a frame may be determined based on the number of sub-frame intervals within the frame interval, and a refresh rate of the first pixels may be different from a refresh rate of the second pixels.

In step S1210, at least one driver IC that drives the first pixels may be controlled to enable positions of the plurality of sub-frame intervals for the first pixels within the frame interval to be different from positions of the plurality of sub-frame intervals for the second pixels within the frame interval.

For example, the plurality of sub-frame intervals for the first pixels may be positioned in a front time interval within the frame interval, and the plurality of sub-frame intervals for the second pixels may be positioned in an entire time interval within the frame interval. In addition, the plurality of sub-frame intervals for the first pixels may be positioned in a rear time interval within the frame interval, and the plurality of sub-frame intervals for the second pixels may be positioned in the entire time interval within the frame interval.

The plurality of sub-frame intervals for the first pixel may be used to identify a position of a region including the first pixels on the modular display device.

Meanwhile, the various embodiments described above may be implemented in a computer-readable recording medium or a device similar thereto that uses software, hardware, or a combination of software and hardware. In some cases, the embodiments described in the specification may be implemented by a processor itself. According to software implementation, the embodiments such as the procedures and functions described in the specification may be implemented by separate software modules. Each of the software modules may perform at least one function or operation described in the specification.

Meanwhile, computer instructions for performing processing operations of the electronic apparatus according to the various embodiments of the present disclosure described above may be stored in a non-transitory computer-readable recording medium. The computer instructions stored in the non-transitory computer-readable recording medium may allow a specific device to perform the processing operations of the modular display device 100 according to the various embodiments described above when the computer instructions are executed by a processor of the specific device.

The non-transitory computer-readable recording medium is not a medium that temporarily stores data, such as a register, a cache, or a memory, and indicates a medium that semi-permanently stores data and is readable by the device. A specific example of the non-transitory computer-readable recording medium may include a compact disk (CD), a digital versatile disk (DVD), a hard disk, a Blu-ray disk, a universal serial bus (USB), a memory card, a read-only memory (ROM), or the like.

Although the embodiments of the present disclosure have been shown and described hereinabove, the present disclosure is not limited to the above-mentioned specific embodiments, and may be variously modified by those skilled in the art to which the present disclosure pertains without departing from the scope and spirit of the present disclosure as disclosed in the accompanying claims. These modifications should also be understood to fall within the scope and spirit of the present disclosure.

## Claims

1. A modular display device comprising:
a plurality of display modules; and
a plurality of timing controllers configured to control a plurality of driver integrated circuits (ICs) included in the plurality of display modules to perform pulse width modulation (PWM) driving on pixels included in the plurality of display modules,
wherein the pixels are driven in a plurality of sub-frame intervals within a frame interval, and
at least one timing controller among the plurality of timing controllers is configured to control at least one driver IC configured to drive first pixels among the pixels included in the plurality of display modules to enable a plurality of sub-frame intervals for the first pixels to be different from a plurality of sub-frame intervals for second pixels.

2. The device as claimed in claim 1, wherein the at least one timing controller may be configured to control the at least one driver IC configured to drive the first pixels to enable the number of plurality of sub-frame intervals for the first pixels within the frame interval to be different from the number of plurality of sub-frame intervals for the second pixels within the frame interval.

3. The device as claimed in claim 2, wherein the number of plurality of sub-frame intervals for the first pixels may be greater than the number of plurality of sub-frame intervals for the second pixels.

4. The device as claimed in claim 2, wherein the number of plurality of sub-frame intervals for the first pixels may be less than the number of plurality of sub-frame intervals for the second pixels.

5. The device as claimed in claim 2, wherein a refresh rate within a frame may be determined based on the number of sub-frame intervals within the frame interval, and
a refresh rate of the first pixels may be different from a refresh rate of the second pixels.

6. The device as claimed in claim 1, wherein the at least one timing controller may be configured to control the at least one driver IC configured to drive the first pixels to enable positions of the plurality of sub-frame intervals for the first pixels within the frame interval to be different from positions of the plurality of sub-frame intervals for the second pixels within the frame interval.

7. The device as claimed in claim 6, wherein the plurality of sub-frame intervals for the first pixels may be positioned in a front time interval within the frame interval, and
the plurality of sub-frame intervals for the second pixels may be positioned in an entire time interval within the frame interval.

8. The device as claimed in claim 6, wherein the plurality of sub-frame intervals for the first pixels may be positioned in a rear time interval within the frame interval, and
the plurality of sub-frame intervals for the second pixels may be positioned in an entire time interval within the frame interval.

9. The device as claimed in claim 1, wherein the plurality of sub-frame intervals for the first pixel may be used to identify a position of a region including the first pixels on the modular display device.

10. A method for controlling a modular display device, in which the device includes a plurality of display modules and a plurality of timing controllers for controlling a plurality of driver integrated circuits (ICs) included in the plurality of display modules, the method comprising:
performing, by at least one first timing controller among the plurality of timing controllers, pulse width modulation (PWM) driving on first pixels among pixels included in the plurality of display modules; and
performing, by at least one second timing controller among the plurality of timing controllers, PWM driving on second pixels among the pixels included in the plurality of display modules,
wherein the pixels are driven in a plurality of sub-frame intervals within a frame interval, and
in the performing of the PWM driving on the first pixels, at least one driver IC configured to drive the first pixels is controlled to enable a plurality of sub-frame intervals for the first pixels among the pixels included in the plurality of display modules to be different from a plurality of sub-frame intervals for the second pixels.

11. The method as claimed in claim 10, wherein in the performing of the PWM driving on the first pixels, the at least one driver IC configured to drive the first pixels is controlled to enable the number of plurality of sub-frame intervals for the first pixels within the frame interval to be different from the number of plurality of sub-frame intervals for the second pixels within the frame interval.

12. The method as claimed in claim 11, wherein the number of plurality of sub-frame intervals for the first pixels is greater than the number of plurality of sub-frame intervals for the second pixels.

13. The method as claimed in claim 11, wherein the number of plurality of sub-frame intervals for the first pixels is less than the number of plurality of sub-frame intervals for the second pixels.

14. The method as claimed in claim 11, wherein a refresh rate within a frame is determined based on the number of sub-frame intervals within the frame interval, and
a refresh rate of the first pixels is different from a refresh rate of the second pixels.

15. The method as claimed in claim 10, wherein in the performing of the PWM driving on the first pixels, the at least one driver IC configured to drive the first pixels is controlled to enable positions of the plurality of sub-frame intervals for the first pixels within the frame interval to be different from positions of the plurality of sub-frame intervals for the second pixels within the frame interval.
